# EUROPEAN PATENT APPLICATION

(11) **EP 1 363 445 A1**
(43) Date of publication of application: **19.11.2003**
(21) Application number: 03076409.6
(22) Date of filing: 09.05.2003
(51) Int. Cl.: H04M 3/51, H04M 3/487

(54) **Method and apparatus for proactively sending a message**

(30) Priority: 17.05.2002 US 381916 P
(71) Applicant: Nortel Networks Limited, St. Laurent, Quebec H4S 2A9 (CA)
(72) Inventor: Thomas, Andrew, Plano, TX 75023 (US); Elberse, Arik A., Galway (IE); Davis, Sheldon J., Guelph, Ontario N1H 1Y4 (CA); Hickey, James, Galway (IE); Marvich, Vickie, Lantana, TX 76226 (US); Prokop, Andrew, St. Paul, MN 55105 (US)
(74) Representative: Anderson, Angela

(57) **Abstract**

Contact centres are typically arranged to receive incoming contacts from customers and act accordingly. That is, the customer initiates contact with the contact centre. More recently, a need has arisen for contact centres to be able to initiate communication with customers. For example, to inform a customer that his or her flight has been cancelled and offer that customer the option to take part in an interactive communication session to book a new flight. A communications system such as a contact centre is interfaced with a business system such as customer relationship management system. In this way messages can be proactively sent to users.

## Description

### FIELD OF THE INVENTION

The present invention relates to a method and apparatus for proactively sending a message. The invention is particularly related to, but in no way limited to, multi-media contact centres arranged to proactively establish interactive communications sessions with users.

### BACKGROUND TO THE INVENTION

Contact centres are known such as telephone call centres for ticket sales, wedding gift services and the like. These contact centres are increasingly able to operate in other media such as email, voice over internet calls, etc. However, these contact centres are typically arranged to receive incoming contacts from customers and act accordingly. That is, the customer initiates contact with the contact centre. More recently, a need has arisen for contact centres to be able to initiate communication with customers.

Previously, contact centres have been arranged to initiate communication with customers by sending out the same communication to many customers for example, for direct marketing campaigns, prospecting sales activities and the like. As a result customers have often come to regard such communications as intrusive, annoying and unwanted. This makes it difficult to successfully use such outbound communications to establish a "live" interactive communication between an end user and the contact centre itself.

Notification services such as that provided by Envoyworldwide, Inc are also known for enabling outbound messages to be issued to one or multiple recipients. However, such notification services are separate from contact centres and this makes it difficult to establish live interactive communication between an end user and a contact centre as a result of an outbound message from the notification service to an end user.

The present invention seeks to find a way in which contact centres can be arranged to initiate communication with customers which overcomes or at least mitigates the problems mentioned above.

Further benefits and advantages of the invention will become apparent from a consideration of the following detailed description given with reference to the accompanying drawings, which specify and show preferred embodiments of the invention.

### SUMMARY OF THE INVENTION

According to a first aspect of the present invention there is provided an apparatus for proactively sending a message to one or more users via a communications network said system comprising:
- a business system arranged to manage information about users;
- a communications system arranged to communicate with users via the communications network using messages of a plurality of media types; and
- an interface between the business system and the communications system arranged such that the business system is able to send a message to the communications system in order that the communications system proactively sends a message to one or more users.

For example, the business system is a customer relationship management system and the communications system is selected from a contact centre, a multi-media contact centre, a call centre and an interactive voice response (IVR) system. This provides the advantage that each system, the business system and the communications system is able to retain its core competencies whilst enabling messages to be sent proactively. In this way the interface between the two systems is simplified and this makes the overall system easier to update, maintain and modify.

Preferably the apparatus is further arranged to establish an interactive communications session between a user who is proactively sent a message and the communications system. For example, if the user is informed that his or her flight is cancelled it is possible to enable the user to enter an interactive communications session with a self-service system at the communications system, or a live agent, in order to book a new flight. By doing this the time of the customer is saved and goodwill with the customer is likely to be retained.

Preferably the business system is arranged to send a message to the communications system via the interface in order to proactively establish a communication session with one or more users, said message comprising information about contact addresses and media types which can be used to contact the one or more users. This provides a simple and efficient way in which the interface is used to effect communication between the business and communications systems.

Preferably the information about contact addresses and media types is ordered to indicate a sequence of communication attempts to use. For example, if the first attempt to contact a user involves telephoning his or her home and that fails, then the next contact address and media type is used.

Preferably the business system is arranged to send a message to the communications system via the interface in order to proactively establish a communication session with one or more users, said message comprising content to be provided to the user in the message proactively sent to the users. That is, the business system generates the content for the message to be sent to the user. This is advantageous because the communications system is then able to focus its resources on actually establishing communication with the user. For example, the message content may be provided in the form of a script such as a VXML script as described in more detail below.

In a preferred example the business system sends the communication system information about one or more agents to be used at the communication system. In this way, when the user requires to establish an interactive communication session with an agent he or she is directed to the most appropriate agent type or agent with the most appropriate skill set.

In a particularly preferred embodiment the communications system comprises an interface to a presence management system such that the communications system is able to obtain information about the most suitable manner in which to contact a particular user at a particular time. This enables users to be contacted efficiently and effectively in a manner most appropriate for them.

According to another aspect of the present invention there is provided a method of proactively sending a message to one or more users via a communications network said method comprising the steps of:
- providing a business system to manage information about users;
- providing a communications system arranged to communicate with users via the communications network using messages of a plurality of media types;
- providing an interface between the business system and the communications system arranged such that the business system is able to send a message to the communications system in order that the communications system proactively sends a message to one or more users.

The invention also encompasses a method of operating an apparatus as described above said method comprising the steps of:
- receiving information about events at the business system;
- generating and sending a message to the communications system on the basis of the received information about events as well as on pre-specified user data;
- at the communications system, receiving the message from the business system and proactively sending messages to any users specified in the received message.

According to another aspect of the present invention there is provided a computer program stored on a computer readable medium and arranged to carry out the method described above.

The preferred features may be combined as appropriate, as would be apparent to a skilled person, and may be combined with any of the aspects of the invention.

### BRIEF DESCRIPTION OF THE DRAWINGS

In order to show how the invention may be carried into effect, embodiments of the invention are now described below by way of example only and with reference to the accompanying figures in which:
Figure 1 is a schematic diagram of an apparatus for proactively sending messages to users;
Figure 2 is a schematic diagram of the business system of Figure 1;
Figure 3 is a schematic diagram of the communications system of Figure 1;
Figure 4 is a flow diagram of a method of proactively sending a message to one or more users.

### DETAILED DESCRIPTION OF INVENTION

Embodiments of the present invention are described below by way of example only. These examples represent the best ways of putting the invention into practice that are currently known to the Applicant although they are not the only ways in which this could be achieved.

The present invention makes use of a business system and a communications system. The term "business system" is used herein to refer to an automated system for managing customer (or other end user) related information such as a customer relationship management (CRM) system or an email response processing (ERP) system. This system maintains a database of information about customers (or other users) and ensures that information is taken into account in future interactions with those customers. The term "communications system" is used herein to refer to an automated system for managing communications with customers or other end users. For example, this could be a contact centre, call centre, or interactive voice response (IVR) system. The communications system is able to send and receive communications to or from customers or other end users.

In a preferred embodiment the invention also makes use of a presence management system. The term "presence management system" is used to refer to an automated system for use in a communications network which provides a single point of presence for a user of that communications network. A point of presence is a source of information about whether a user is available for contact on a communications network, where that user is located on the network, and in which mode that user should preferably be contacted in. A presence management system provides a single point of presence despite the fact that a user has more than one terminal for accessing the communications network in different modes and possibly by different access communications networks. A presence management system also provides context information rather than just raw presence information. Raw presence information is unprocessed information about the availability, location and capability of a user on the communications network. A presence management system processes raw presence information according to rules or other pre-specified criteria about users in order to provide context information that is simpler and easier for human operators to understand.

The present invention enables proactive business initiated customer contacts to be made from a communications system such as a contact centre. This is preferably achieved in a manner that enables a live communication session to be established between the end user or customer and the communication system. For example, between a customer and a call centre agent. In order to do this, a communications system such as a contact centre is integrated with a business system such as a customer relationship management system. The manner in which this integration is achieved is advantageously arranged such that each of the systems (business and communications) is able to focus on its core competencies.

There are many situations in which it may be required to proactively contact one or more users or customers in a time-sensitive manner. For example, in the case that a customer's flight has been cancelled it is advantageous to contact the customer immediately by the most appropriate means and to enable the customer to enter a live communication session with a contact centre agent or self-service system in order to resolve the situation. Similar situations arise with appointment booking systems such as for a Medical Clinic. Other examples relate to situations in which customers need to be notified of price changes, changes in the stock market or other factors. For example, a customer may have requested to be contacted once a particular share price falls below a pre-specified threshold.

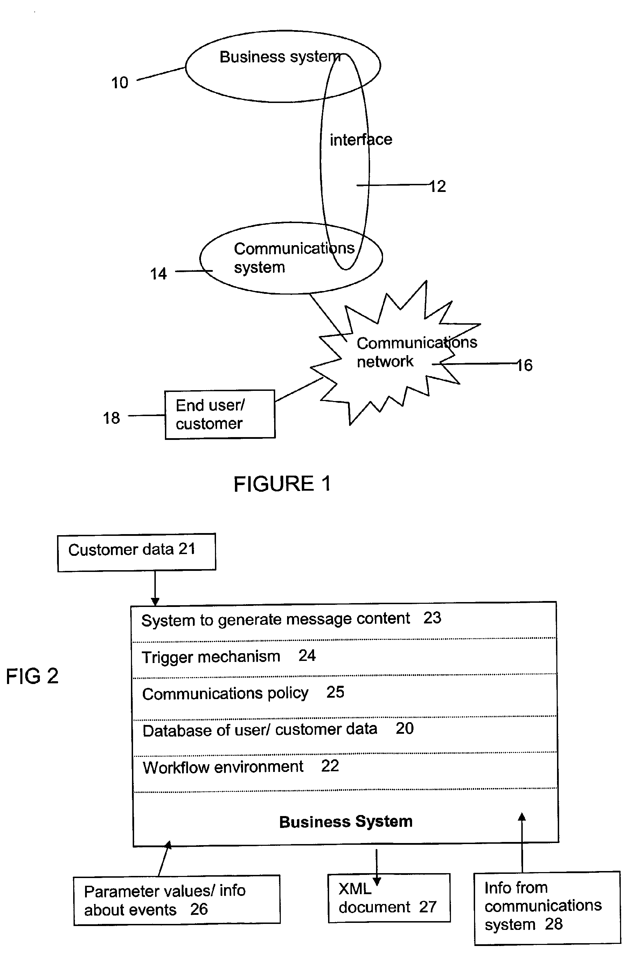

Figure 1 is a schematic diagram of a system according to the present invention. It shows a business system 10 connected to a communications system 14 via an interface 12. The communications system is connected to a communications network 16 via which end users 18 such as customers are able to access the communications system 14.

In a preferred embodiment of the present invention, the business system 10 is arranged to determine when a proactive business initiated customer contact is needed. It also forms the content for a suitable contact message and provides details of the customer or customers to which the message is to be sent. This information is sent to the communications system 14 via the interface 12. The communications system is arranged to receive that information and establish an appropriate communication with the customer or customers involved. A key benefit of this arrangement is that the business and communications systems are each able to focus on their core competencies.

In one embodiment the business system and the communication system each have a workflow environment as known in the art. Such a workflow environment controls the complex system that is either the business system or the communications system. In that case, the interface 12 connects the two workflow environments.

An alternative to the arrangement described above with reference to Figure 1 would be to use a business system and adapt the workflow of that system such that it is directly involved in initiating customer contacts. This would require that the business system workflow has low level communications control in order to carry out functions such as:
- Initiate outbound calls in different media
- Initiate alternative outbound calls should an initial attempt to reach the customer fail
- Provide an appropriate, customised, self-service interactive voice response dialogue with the customer

Whilst this approach is workable it would require a more complex custom integration than that proposed above with reference to Figure 1. For example, the workflow of known business systems such as CRM systems are not typically well suited to management of real-time, multi-threaded communications. In addition, multiple changes would be required each time a change to the operating parameters of the proactive business initiated customer contact method was required (e.g. the sequence of addresses to contact or the time spent trying each one).

The business system is shown in more detail in Figure 2. As with known business systems a database of customer (or other user) data is maintained 20 and information about changes in customer data is accessed by the system 21. Also as known in the art a workflow environment 22 is provided which acts as a control system for the business system. In the present invention the business system preferably also has a system to generate message content 23 for messages that will be sent in a proactive manner to end users or customers. For example that system can product text for incorporation into an email, text message or fax. Also, in the case that the communications system comprises an interactive voice response (IVR) system a script can be generated, such as a VXML (voice extendible mark up language) script which can be thought of as a web page comprising an XML template containing text for converting into speech by an IVR system and playing as prompts in that IVR system. In a preferred embodiment the system to generate message content 23 produces a plurality of these message content formats for a particular instance of a proactive message. This ensures that different types of message can be issued in the event that some types fail or are not preferred by particular customers. In a particularly preferred embodiment, the system for generating message content 23 is arranged to form scripts suitable for providing chat messages.

The business system also comprises a trigger mechanism 24 comprising pre-specified criteria, thresholds, values or rules for triggering the issuing of messages as a result of pre-specified events occurring. The business system is arranged to access or receive information 26 about events or parameter values and this information is input to the trigger mechanism 24. For example, this information could be share price information, information about cancelled or delayed airplane flights, or information about changes in product prices.

In a preferred embodiment the business system also comprises pre-specified information about a communications policy 25. For example, this is a prioritised list of modes of communication (e.g. email, fax, text, chat) that are to be attempted in a particular order in particular situations (e.g. time of day).

The business system is arranged to output 27 information to the communications system and this is preferably achieved by generating an XML document and sending that. However, this is not essential. Information sent from the business system to the communication system may be in any suitable form. The business system is preferably also arranged to receive information 28 from the communications system in any suitable form. For example, this is information about whether a particular proactive message issued to a customer resulted in a successful interactive communication session being established with that customer. However, this is not essential. The business system does not have to be able to receive information from the communications system.

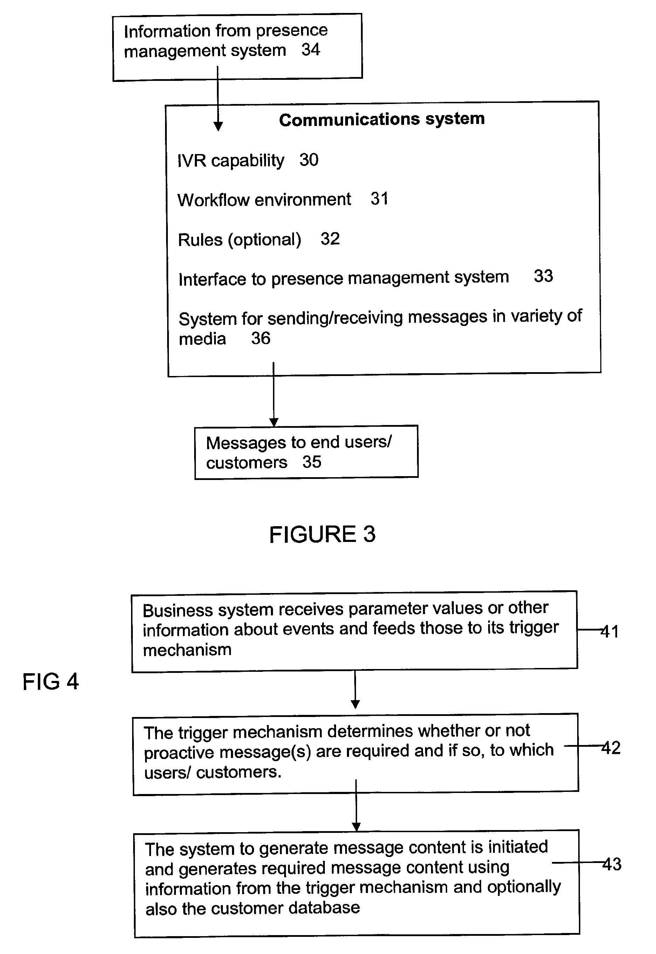

The communications system is now described in more detail with reference to Figure 3. This comprises a system for sending and receiving messages 36 in a variety of media as known in the art. Preferably an Interactive Voice Response (IVR) capability 30 is also provided and preferably an interface to a presence management system 33. As with the business system a control system or workflow environment 31 is provided and optionally rules or other criteria 32. For example, these rules are arranged such that if a particular mode of communication is successful other modes of communications are not attempted. Another example is, if a call to a mobile phone fails because that phone is engaged, do not try other modes of communication but wait for a specified time and then reattempt to call the mobile.

In a preferred example the communications system is arranged to receive information 34 from a presence management system and is arranged to output 35 messages to end/users or customers.

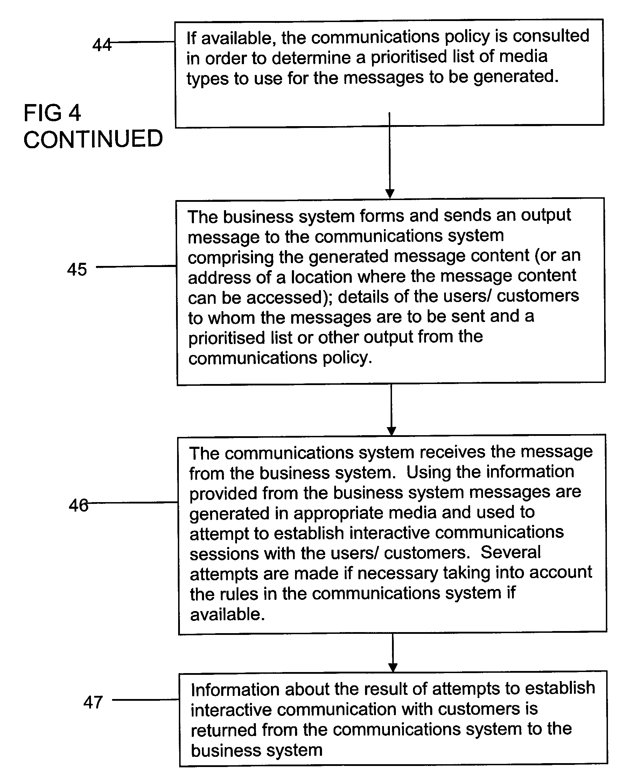

Figure 4 is a flow diagram of an example of a method of using the system of Figure 1. The business system receives parameter values or other information 26 about events and feeds those to its trigger mechanism 24 (see step 41 of Figure 4). The trigger mechanism then determines whether or not proactive message(s) are required and if so, for which users/ customers (see step 42 in Figure 4). The system to generate message content 23 is initiated and generates any required message content using information from the trigger mechanism and optionally also the customer database (see step 43). If available, the communications policy 25 is consulted in order to determine a prioritised list of media types to use for the messages to be generated (step 44). The business system then forms and sends an output message (such as an XML document) to the communications system comprising at least the generated message content (or an address of a location where the message content can be accessed); details of the users/ customers to whom the messages are to be sent and a prioritised list or other output from the communications policy (see step 45).

The communications system receives the XML document or other message from the business system. Using the information contained in that XML document, messages are generated in appropriate media and used in a preferred embodiment to attempt to establish interactive communications sessions with the users/ customers. Several attempts are made if necessary taking into account the rules in the communications system if available (see step 46). In another embodiment proactive messages a simply sent to users or customers without requiring an interactive communication session to be established; rather a reply or acknowledgement from the user or customer is awaited.

The end users or customers receive the proactive messages and are able to respond to invitations to establish interactive communications sessions with the communications system. For example, the message sent to the customer might be an email containing a "click to talk" icon which can be used by the customer to establish a telephone call or voice over IP call with a call centre agent via the communications system. However, it is not essential to use a "click to talk" icon. Any other suitable method of allowing the customer or user to establish an interactive communication session with the communications system can be used.

Information about whether an interactive communication session (or acknowledgement from the user) is achieved is preferably returned from the communication system to the business system (see step 47).

In a preferred embodiment a presence management system is provided and the communications system is arranged to interface with that presence management system. In this case, the communications system obtains information from the presence management system about the optimal manner in which to contact a particular user or customer at a particular time. For example, the presence management system may provide information indicating that a particular user is operating his or her computer in the office such that the user is contactable at his or her office land line phone, soft phone on the computer, by email, or by instant message.

In a particularly preferred example, the business system is a customer relationship management system (CRM system) and the communications system is a contact centre with IVR functionality.

An example of information contained in an XML document or other message to be sent from the business system to the communications system is now given.

Information about the proactive communication to be sent, for example, to whom, from whom, what purpose/subject, priority, reference identifier or customer transaction identifier.

A list of contact addresses and media types that can be used to contact a particular customer.

Times at which the contact addresses and communications means can be used. This information may be pre-specified by the customer and/or by the organisation initiating the contact.

A sequence of communications attempts to be used, some of which may be in parallel. For example, this includes addresses and media types to be used in a particular order for a particular number of times and with particular time intervals between attempts. In a particular case, this might be to attempt to contact a user at his or her home first and if that fails, then at the office, then by mobile phone and as a final resort send an email and SMS message and keep tying to reach the user by mobile.

Information about how the user or customer can contact the communication system in relation to the proactive message and take part in a self-service communication session. For example, this can comprise a VXML script as described above and content can be included for situations such as when the proactive message is by telephone and reaches an answer machine. In that case an announcement can be made and recorded on the answer machine.

In a preferred example the communications system comprises a contact centre with a plurality of agents of different skill sets. In that case the XML document or other message comprises details of an agent ID, type of skill set that is required to be available (with an indicated level of service, such as wait time) when the customer contact is established. Alternatively, this information is made available as part of a VXML script (mentioned above) or other suitable type of script.

In another example, the XML document or other message comprises information about a fall-back communications means should the primary contact methods fail. For example, this could be to contact the user's colleague, friend or family member for urgent matters.

An example of the content for an XML document or other message to be sent from the business system to the communications system is now given in pseudo script. This example relates to a situation in which an airline company wishes to contact one of its customers to inform them that their flight has been cancelled, in this case shortly before the customer is due to take the flight.

In this scenario, when the customer receives a communication (e.g. a telephone call) informing them about the cancellation, they are given an appropriate, automated and customised message. The message offers the customer the option of using a self-service system to re-book the flight and/or the option to be connected to a live agent. The live agent receives reference details about the communication and using those is able to identify the details of the matter the customer is enquiring about.

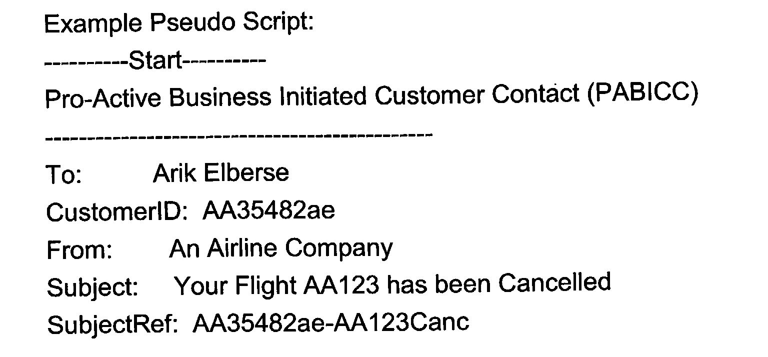

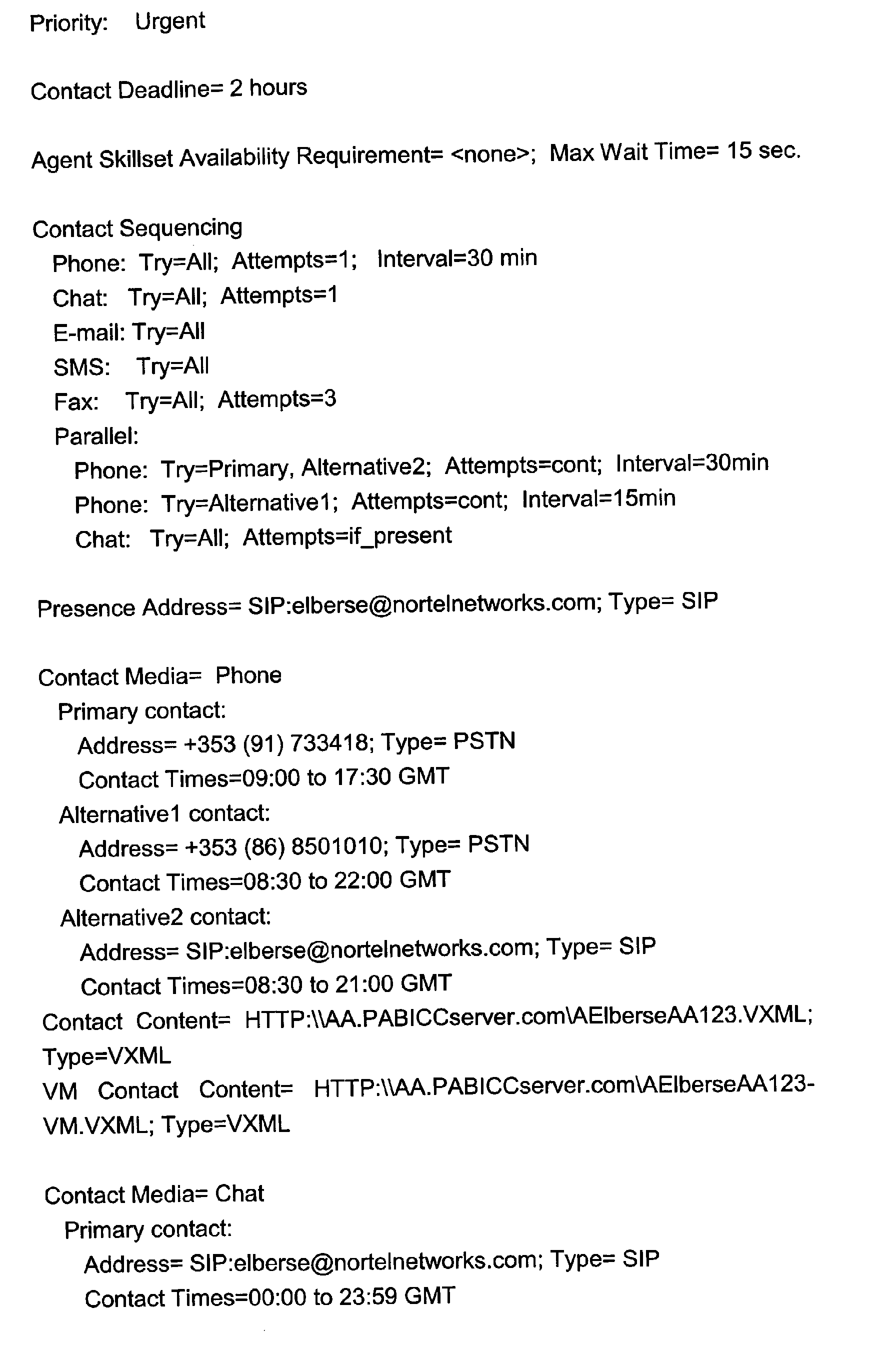

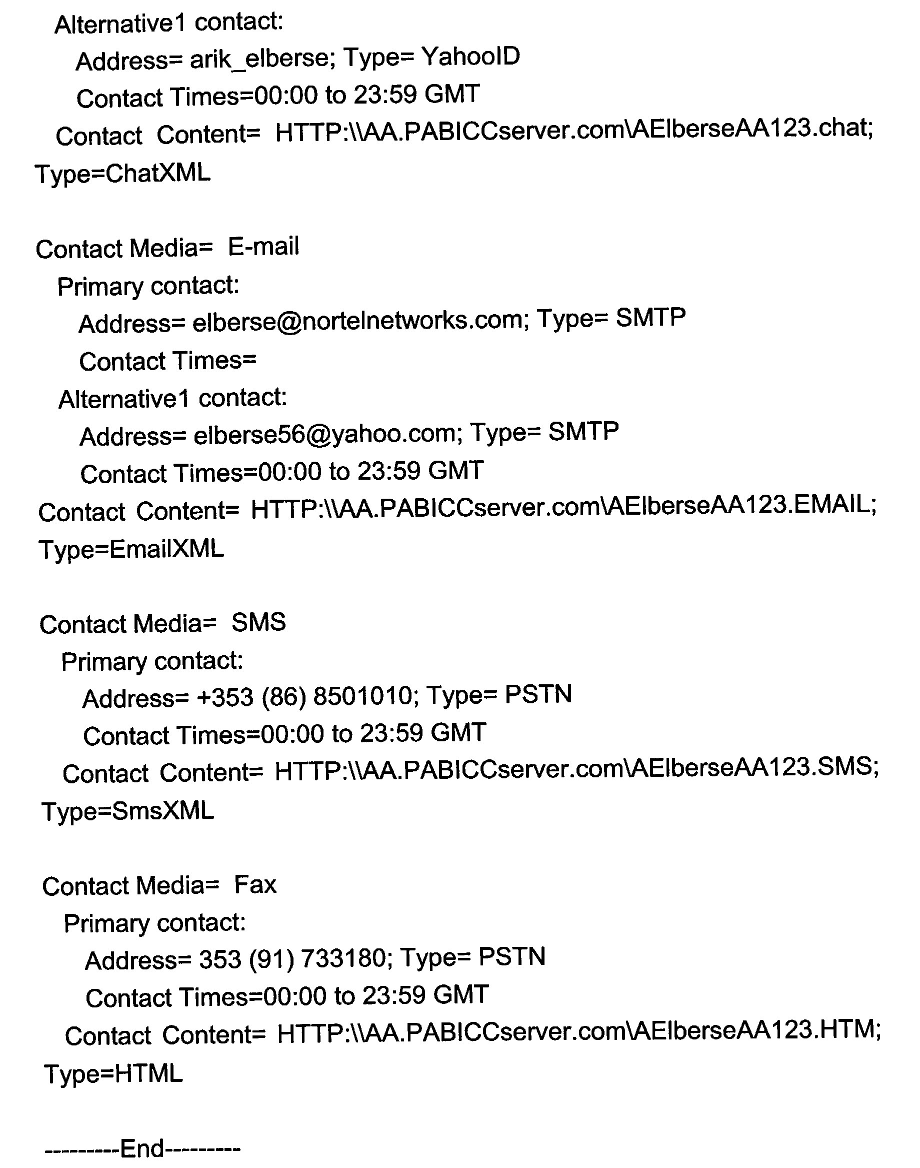

Any range or device value given herein may be extended or altered without losing the effect sought, as will be apparent to the skilled person for an understanding of the teachings herein.

## Claims

1. An apparatus for proactively sending a message to one or more users via a communications network said system comprising:
(i) a business system arranged to manage information about users;
(ii) a communications system arranged to communicate with users via the communications network using messages of a plurality of media types; and
(iii) an interface between the business system and the communications system arranged such that the business system is able to send a message to the communications system in order that the communications system proactively sends a message to one or more users.

2. An apparatus as claimed in claim 1 wherein said business system is a customer relationship management system.

3. An apparatus as claimed in claim 1 wherein said communications system is selected from a contact centre, a multi-media contact centre, a call centre and an interactive voice response (IVR) system.

4. An apparatus as claimed in claim 1 which is further arranged to establish an interactive communications session between a user who is proactively sent a message and the communications system.

5. An apparatus as claimed in claim 4 wherein said interactive communications session is a live session between a user and an agent at the communications system.

6. An apparatus as claimed in claim 4 wherein said interactive communications session is a self-service communication session.

7. An apparatus as claimed in claim 1 wherein the business system is arranged to send a message to the communications system via the interface in order to proactively establish a communication session with one or more users, said message comprising information about contact addresses and media types which can be used to contact the one or more users.

8. An apparatus as claimed in claim 7 wherein said information about contact addresses and media types is ordered to indicate a sequence of communication attempts to use.

9. An apparatus as claimed in claim 1 wherein the business system is arranged to send a message to the communications system via the interface in order to proactively establish a communication session with one or more users, said message comprising content to be provided to the user in the message proactively sent to the users.

10. An apparatus as claimed in claim 9 wherein said content is provided in the form of a script such as a VXML script.

11. An apparatus as claimed in claim 1 wherein the business system is arranged to send a message to the communications system via the interface in order to proactively establish a communication session with one or more users, said message comprising information about one or more agents at the communications system.

12. An apparatus as claimed in claim 1 wherein the business system comprises a system to generate message content for the message to be proactively sent.

13. An apparatus as claimed in claim 1 wherein the business system comprises a communications policy arranged to determine a prioritised list of media types to be used for the messages to be proactively sent.

14. An apparatus as claimed in claim 1 wherein the communications system comprises an interface to a presence management system such that the communications system is able to obtain information about the most suitable manner in which to contact a particular user at a particular time.

15. An apparatus as claimed in claim 1 wherein the communications system comprises one or more rules about how communications are to be effected.

16. A method of proactively sending a message to one or more users via a communications network said method comprising the steps of:
(i) providing a business system to manage information about users;
(ii) providing a communications system arranged to communicate with users via the communications network using messages of a plurality of media types;
(iii) providing an interface between the business system and the communications system arranged such that the business system is able to send a message to the communications system in order that the communications system proactively sends a message to one or more users.

17. A method of operating an apparatus as claimed in claim 1 said method comprising the steps of:
(i) receiving information about events at the business system;
(ii) generating and sending a message to the communications system on the basis of the received information about events as well as on pre-specified user data;
(iii) at the communications system, receiving the message from the business system and proactively sending messages to any users specified in the received message.

18. A computer program stored on a computer readable medium and arranged to carry out the method of claim 17.
